Europäisches Patentamt

European Patent Office

Office européen des brevets

(11) Publication number: **0 146 840**
**A2**

(12) # EUROPEAN PATENT APPLICATION

(21) Application number: **84114765.5**

(22) Date of filing: **04.12.84**

(51) Int. Cl.⁴: **E 04 B 1/76**

(30) Priority: **05.12.83 US 558690**

(43) Date of publication of application:
**03.07.85 Bulletin 85/27**

(84) Designated Contracting States:
**AT BE CH DE FR GB LI LU NL SE**

(71) Applicant: **MANVILLE SERVICE CORPORATION
Ken-Caryl Ranch
Denver Colorado 80217(US)**

(72) Inventor: **Kielmeyer, William Henry
3374 West Chenango Avenue
Englewood Colorado 80110(US)**

(74) Representative: **Grättinger, Günter
Wittelsbacher Strasse 5 Postfach 16 49
D-8130 Starnberg(DE)**

(54) Hybrid blowing insulation.

(57) A hybrid fiber glass cellulosic blowing insulation. Fiber glass nodules are blended with cellulosic fibers which have been treated with a flame retardant in proportions ranging from 30 to 70% fiber glass and from 70 to 30% treated cellulosic fibers. Some examples of the hybrid insulation are more effective at insulating and, hence, less costly per square foot to install, than either of their component parts. Further, the insulation of the present invention will not smoulder when exposed to a temperature exceeding 500°F (260°C) for a period of six (6) or more hours.

EP 0 146 840 A2

Croydon Printing Company Ltd

## Background and Summary of the Invention

Various kinds of "loose fill" or "blowing" insulation (particulate insulation which is blown into cavities such as walls and attics by pneumatic means) have become increasingly popular with home owners and contractors alike for certain application because of its comparative ease of installation. One form of blowing insulation frequently used is a nodulated fiber glass. Another is a treated cellulosic fiber (shredded newspaper or fiberized wood pulp).

There are a number of problems with each of these currently available forms of blowing insulation. Originally, cellulosic fiber experienced difficulties because of its flamability. However, recent developments in flame retardants have significantly reduced this hazard. Further, the allure of cellulose as a breeding ground for vermin can also be reduced by chemical treatment. Nonetheless, even treated cellulosic fibers can smoulder when exposed to a hot wire or electrical box in a wall or attic. This smouldering can, in turn, produce temperatures which are sufficient to ignite untreated wood members used in the construction of the building. In addition, processed newspaper has a tendency to settle, decreasing its thickness, increasing its density and adversely affecting its insulating characteristics.

While nodulated fiber glass has no such smouldering problem and is unattractive to pests, it does run into economic difficulties. Typically, glass nodules do not have a high enough R-per-inch to compete with cellulosic fibers. Generally, even fiber glass batts cannot compete with cellulosic fibers on the basis of cost alone. The equipment, time and handling involved in turning fiber glass blanket into nodules, rather than batts, further adds to the cost of this particular blowing insulation, making it even less cost competitive.

The hybrid blowing insulation of the present invention overcomes the disadvantages of both nodulated fiber glass and cellulosic fibers while drawing on the advantages of each. A blend of from between 30 to 70% by weight fiber glass nodules and 70 to 30% treated cellulosic fiber produces a hybrid blowing insulation which is smoulder-resistant and has an R-per-inch which exceeds 2.3. The hybrid insulation is unattractive to pests and does not settle as badly as pure cellulosic fiber. The cellulosic fibers, in effect, extend the fiber glass while the glass nodules hold open the cellulosic fibers, reducing compaction and preventing propagation of smouldering. This hybrid insulation is only moderately more expensive than cellulose fibers alone and in some cases, may actually cost less for the same R value. The hybrid blowing insulation is more preferably 40-60% fiber glass nodules and 60-40% cellulosic fibers with a combined R-per-inch value in the neighborhood of 3.0.

Other features, characteristics and advantages of the present invention will become apparent after a reading of the following description.

### Description of the Preferred Embodiments

The hybrid blowing insulation of the present invention comprises a blend of from between 30 to 70% fiber glass nodules and 70 to 30% cellulosic fiber which has been treated with a flame retardant. The fiber glass nodules can be produced by any known process. For example, the nodules may be produced using the hammermilling process disclosed and claimed in U. S. Patent 3,584,796. An advantage of using this process is that scrap batt and board products can be used to produce the nodules. An alternative method, in which fiber glass blanket is sliced and diced into nodules, is described and claimed in U. S. Patent 4,366,927. Because of the superior characteristics of the nodules (lower density, reduced thermal conductivity), this latter method is preferred.

The cellulosic fiber may take the form of either treated, shredded newspaper or fiberized wood pulp. In either case, the cellulosic fiber must be treated with a fire retardant. Any of a number of commercially available materials will do. However, the fire retardant should comprise no less than 16% of the treated cellulose fiber by weight. More preferably, the amount of flame retardant exceeds 24% by weight of the treated cellulosic fiber. An example of a suitable fire retardant is a mixture of borax and boric acid in a ratio of at least 2 to 1, by weight. This fire retardant may be applied as a liquid solution and the excess moisture removed by drying or the mixture may be applied to the cellulosic fibers in the form of a powder and "pounded" into the fibers. Many alternative fire retardants employing various combinations of sulfates, phosphates, and other soluble inorganic salts are available, any one of which would be suitable in this application.

A suitable treated cellulosic fiber is marketed by K-2 Industries, Ft. Collins, Colorado under the tradename "Supertherm." This processed newspaper is purported to have a 3.6 R-per-inch at an installed density of 2.67 pounds per cubic foot. An analysis of this treated cellulosic fiber shows it to be approximately 27% by weight borax and 3% boric acid. An alternate cellulosic source is marketed by Premium Industries Ltd., in Canada under the tradename "R-Fact." This processed wood pulp has a 3.57 R-per-inch at an installed density of 2.0 pounds per cubic foot. The method of manufacture of this product is described in Canadian patent 1,126,466. Briefly, bales of compacted wood pulp, which have been treated with wet chemical fire retardants at the pulp mill and then compressed and flash dried, are fed horizontally against a vertically moving grinding belt to create partially separated and intermingled collections of fibers. These fibers fall into a feed hopper where they are acted on by a fixed disc and a rotating disc, said disc pair having intermeshed teeth which further act to comb and separate the fibers into a loosely intermingled collection of fibers.

As previously noted, most if not all, cellulosic fibers treated with a flame retardant, are subject to smouldering, a flameless exothermic oxidation that is self-perpetuating. In order to insure that this undesirable property was not transmitted to the hybrid blowing insulation, a method and apparatus were developed to test each blended sample. The test fixture comprised a 2' x 2' x 1' box made of refractory board into which a pair of 2" x 4" x 24" wooden beams are placed on 16" centers to simulate ceiling joists. Midway between the 2 by 4's in the approximate center of the box is positioned a 077 P-Chromalox heater ring. Two thermocouples are positioned within the box, the first in contact with the ring and the second positioned two inches above the ring embedded in the insulation to measure heat propagation (i.e., smouldering) within the sample. The simulated ceiling cavity is then filled with the sample to be tested using normal installation techniques (i.e., pneumatic means) and, then, 40 amps of current at 120 volts put through the heat ring for eight hours. The temperatures at the two thermocouples were monitored at least once each half hour. The temperature of the plate exceeded 500°F (260°C) for more than 6 hours of the 8 hour period and usually exceeded 625°F (330°C) for some shorter period of time. Criteria for failure were determined to be a temperature exceeding 450°F (240°C) at the 2" thermocouple or carbonization (charring) in the sample more than one inch from the heater ring.

## Example I

Scrap fiber glass was hammermilled to produce nodules having approximate sizes in the range of 1/4 inch to 1 1/2 inch cubes. This hammermilled product typically has a blown density of 1.1 pcf with an R-19 at that density. These nodules were blended with the treated cellulose fiber "Supertherm" described above and tested in formulations ranging from 100% fiber glass nodules to 100% cellulose. The two components were mechanically blended for a period of five minutes in the hopper of a Vanco Model UW2590-16 Insulation Blower with the engine idle speed at 1800 rpm. Mechanical, rather than pneumatic, blending is preferred to insure intimate mixing of the two diverse fibrous materials. The idle speed was then increased to 2200 rpm, the valve opened and the samples blown into the test frames to determine coverage, thermal (R) values and smoulder resistance.

The results of these tests for the various compositions are shown in TABLE I. Also shown are comparative costs. These costs assume costs of $.08 per pound for cellulose and $.30 per pound for fiber glass. Actual component costs will vary and these cost data are presented for comparison only.

TABLE I

| Composition (% by wt) | | Quantity/100 SF for R-19 (Pounds) | | R-19 Thickness | | | Hot Plate |
|---|---|---|---|---|---|---|---|
| F/G | Cellulose | Total | F/G portion | in. | R/in. | Cost/SF($) | Results |
| 100 | 0 | 59.6 | 59.6 | 6.5 | 2.92 | 0.179 | P |
| 70 | 30 | 61.8 | 43.3 | 6.2 | 3.09 | 0.145 | P |
| 60 | 40 | 57.4 | 34.5 | 6.4 | 2.95 | 0.122 | P |
| 50 | 50 | 67.5 | 33.7 | 6.0 | 3.14 | 0.128 | P |
| 40 | 60 | 72.9 | 29.2 | 5.7 | 3.32 | 0.122 | P |
| 30 | 70 | 80.2 | 24.1 | 5.5 | 3.44 | 0.117 | F |
| 0 | 100 | 117.4 | 0 | 5.3 | 3.60 | 0.094 | F |

The three blends containing 60%, 70% and 100% cellulose failed the hot plate test. The blends from 40% to 60% fiber glass and 60% to 40% cellulose not only passed the hot plate test, but they have an installed cost of only three cents per square foot more than cellulose. The additional advantage of being smoulder-resistant makes this blend of blowing insulation cost competitive with pure cellulose.

EXAMPLE II

Virgin Fiber glass wool, in the form of blanket having a density of 0.5 to 0.6 pounds per cubic foot and a binder content of 6% or less, was sliced and diced using the method described in U. S. Patent 4,366,927 to produce nodules in the size range of 1/4 inch to 3/4 inch square with a delaminated) thickness varying from 1/16 to 1/2" thick. By themselves, these nodules have installed density of 0.49 lbs/ft$^3$. These nodules were then blended with the cellulosic fibers used in Example I using the same blending and blowing procedures. The results and comparative costs appear in TABLE II.

TABLE II

6

0146840

| Composition (% by wt) | | Quantity/100 SF for R-19 (Pounds) | | R-19 Thickness | | | | Hot Plate |
|---|---|---|---|---|---|---|---|---|
| F/G | Cellulose | Total | F/G portion | in. | R/in. | Cost/SF($) | | Results |
| 70 | 30 | 48.9 | 34.2 | 8.1 | 2.34 | 0.114 | | P |
| 60 | 40 | 54.0 | 32.4 | 6.2 | 3.05 | 0.114 | | P |
| 50 | 50 | 55.6 | 27.8 | 6.4 | 3.00 | 0.106 | | P |
| 40 | 60 | 57.7 | 23.1 | 5.9 | 3.24 | 0.097 | | P |
| 30 | 70 | 61.1 | 20.1 | 5.2 | 3.64 | 0.098 | | P |

All formulations between 30% and 70% fiber glass and 70% and 30% cellulose passed the hot plate test. In addition, two formulations namely, the 60% and 70% cellulose blends come within 1/2 cent per square foot of the cost of cellulose alone. Hence, these blends have the low cost advantages of cellulose without the problems of smouldering or pest breeding ordinarily associated therewith. In fact, by comparing the results of TABLES I and II, it can be seen that the 70% blend actually has a higher R-per-inch than cellulose alone. This synergistic result is wholly unexpected.

A possible explanation can be offered on the basis of how glass fibers alone are believed to work. Isolated air is one of nature's best insulators. Fiber glass isolates myriads of tiny air pockets. The less the density of the fiberglass and the finer the fiber diameter, the more the number of isolated air pockets and the better the insulation capability (i.e., the lower the thermal conductivity). The present invention is able to produce a hybrid blowing insulation with a larger R-per-inch than pure cellulose by adding fiber glass nodules (an insulator with a lower R-per-inch), possibly, due to the fact that the nodules separate and open the cellulose fibers (i.e., increase the amount of entrapped air).

### EXAMPLE III

Armed with the success of Example II, Applicant sought, and found, an even lower density fiber glass. The blanket used had an original density of from 0.4 to 0.5 $lb/ft^3$ and 5% binder content. The blanket was sliced and diced using the method of the previous example into nodules which were 1/2" square by 1/16" to 1/2" inch thick. The thusly formed nodules had a blown density of 0.4? lb/ft$^3$. This diced wool was blended with the cellulosic fibers utilized in the previous two examples using identical equipment and blending and blowing techniques. The results of the hot plate tests and cost comparisons appear in TABLE III.

### TABLE III

| Composition (% by wt) | | Quantity/100 SF for R-19 (Pounds) | | R-19 Thickness | | | Hot Plate |
|---|---|---|---|---|---|---|---|
| F/G | Cellulose | Total | F/G portion | in. | R/in. | Cost/SF($) | Results |
| 50 | 50 | 48.5 | 24.2 | 6.5 | 2.94 | .092 | P |
| 40 | 60 | 50.7 | 20.3 | 6.1 | 3.13 | .085 | P |
| 30 | 70 | 61.5 | 18.5 | 5.6 | 3.42 | .090 | P |
| 20 | 80 | 68.1 | 13.6 | 5.3 | 3.6 | .084 | F |

The only blend failing the hot plate test was the one containing 80% cellulose. All four tested blends had installed costs per square foot for R-19 which were below that of cellulose alone. It should be noted, however, that the hybrid blend was not packaged prior to testing. The two components were, on the other hand, packaged before blending. The impact of packaging, therefore, is uncertain; packaging could increase density, installed thickness and cost per square foot. Because of the aeration during installation, the material will most probably be fluffed such that compaction during packaging will not significantly impact these estimates.

### EXAMPLE IV

The low density, diced fiber glass of Example III was then blended with another form of cellulosic fibers, in this case, a treated wood pulp. In some areas of the world, processed newspaper is viewed unfavorably due, in part, to the problems associated with its original introduction as an untreated product. The wood pulp of the present Example is that described supra, marketed under the tradename "R-Fact."

The glass nodules and cellulosic fibers were blended in amounts ranging from 70 to 30% glass and from 30 to 70% cellulose. These blends were then tested for smoulder resistance using the apparatus and procedure described above. The results of these facts and comparitive cost information is presented in Table IV. The costing presumes a cost of $.30 per pound for diced fiber glass and $.15 per pound for the treated wood pulp. These costs are presented for comparison only as actual costs will vary from those presumed.

TABLE IV

| Composition (% by wt) | | Quantity/100 SF for R-19 (Pounds) | | R-19 Thickness | | | Hot Plate |
|---|---|---|---|---|---|---|---|
| F/G | Cellulose | Total | F/G portion | in | R/in. | Cost/SF($) | Results |
| 70 | 30 | 41.2 | 28.8 | 7.4 | 2.58 | 0.105 | P |
| 60 | 40 | 47.0 | 28.2 | 6.8 | 2.81 | 0.113 | P |
| 50 | 50 | 49.6 | 24.8 | 6.3 | 3.03 | 0.112 | P |
| 40 | 60 | 48.7 | 19.5 | 6.2 | 3.08 | 0.102 | P |
| 30 | 70 | 56.5 | 17.0 | 5.6 | 3.39 | 0.110 | F |

All samples with the exception of the 30/70 glass/cellulose blend passed the hot plate, smoulder-resistance testing. As was the case with Examples II and III, the blends of Example IV show a lower cost for the 40/60 blend of fiber glass and cellulose, indicating that for these two compounds, this ratio may be most cost effective.

The present invention has discovered an unexpected synergistic effect of combining from 30 to 70% fiber glass nodules from 70 to 30% treated cellulosic fibers. These two fibers, when blended, produce a more effective, less costly insulation material than either of the two fibrous materials individually. This is believed to be a result of the fiber glass nodules maintaining an increased amount of trapped air in the cellulose by preventing settling of the cellulosic fibers. These individual trapped air pockets improve or enhance the insulation properties of the blended materials.

Various changes, modifications and alterations will become apparent following a reading of the foregoing specification.

Accordingly, it is intended that all such changes, modifications and alterations as come within the scope of the appended claims, be considered a part of the present invention.

## Claims

What we claim is:

1. A hybrid blowing insulation comprising from 30 to 70% by weight fiber glass nodules blended with from 70 to 30% by weight cellulosic fiber, said cellulosic fiber having been treated with a flame retardant, said hybrid blowing insulation being smolder resistant when exposed to a hot plate having a temperature which exceeds $500^{\circ}F$ $(260^{\circ}C)$ for a period of six hours and having an R-per-inch value of at least 2.3.

2. The blowing insulation of Claim 1 wherein said cellulosic fiber is treated with a combination of borax and boric acid to make it flame retardant.

3. The blowing insulation of Claim 1 wherein said cellulosic fiber is processed newspaper.

4. The blowing insulation of Claim 1 wherein said cellulosic fiber is treated wood pulp.

5. The blowing insulation of Claim 1 wherein the blend of fiber glass nodules and cellulosic fiber are preferably in the range of 40-60% by weight and 60-40% by weight respectively.

6. The blowing insulation of Claim 1 wherein the blended fiber glass nodules and cellulosic fibers have an R-per-inch value in the neighborhood of 3.0.

7. The blowing insulation of Claim 1 wherein said hybrid insulation exhibits no greater than a temperature of $450^{\circ}F$ $(240^{\circ}C)$ two inches above a heat source when said heat source has temperatures exceeding $625^{\circ}F$ $(320^{\circ}C)$.

8. A method of producing a hybrid blowing insulation comprising

   a) forming nodules of fiber glass from preformed blanket, board or the like,

   b) treating cellulosic fibers with a flame retardant mixture such as a mixture of borax and boric acid,

   c) blending said fiber glass nodules and said treated cellulosic fibers in amounts of from 30 to 70% by weight glass and from 70 to 30% by weight cellulose to produce a hybrid blowing insulation with an R-per-inch of at least 2.3 and which shows no signs of smoldering when exposed to a wire having a temperature in excess of 500°F (260°C) for a period of at least six hours.

9. The method of Claim 8 wherein said glass nodules are formed by a hammermilling process.

10. The method of Claim 8 wherein said glass nodules are formed by slicing and then dicing the preformed fiber glass blanket or the like.

11. The method of Claim 8 wherein the cellulosic fibers are made by shredding newspaper.

12. The method of Claim 8 wherein the cellulosic fibers are made by treating wood pulp.

13. The method of Claim 8 wherein the fiber glass nodules and cellulosic fibers are preferably blended in amounts ranging between 40-60% by weight and 60-40% by weight, respectively.